(19) Europäisches Patentamt / European Patent Office / Office européen des brevets

(11) **EP 1 816 886 B1**

(12) **EUROPEAN PATENT SPECIFICATION**

(45) Date of publication and mention
of the grant of the patent:
**30.07.2008  Bulletin 2008/31**

(51) Int Cl.:
**H04Q 7/38** (2006.01)

(21) Application number: **06250644.9**

(22) Date of filing: **07.02.2006**

(54) **Communicating data at reduced transmission latency in radio communication system having TDMA radio interface**

Kommunikation von Daten mit verringerter Übertragungslatenzzeit in einem Funkkommunikationssystem mit TDMA Radioschnittstelle

Communication de données avec temps d'attente réduit dans un système de radiocommunication avec interface radio TDMA

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(43) Date of publication of application:
**08.08.2007  Bulletin 2007/32**

(73) Proprietor: **Research In Motion Limited Waterloo, Ontario N2L 3W8 (CA)**

(72) Inventors:
• **Pecen, Mark**
  **Waterloo, Ontario N2L 5P3 (CA)**
• **Lazaridis, Mihal**
  **Waterloo, Ontario N2T 2K1 (CA)**
• **Simmons, Sean**
  **Waterloo, Ontario N2T 1E7 (CA)**
• **Dwyer, Johanna**
  **Waterloo, Ontario N2L 5L3 (CA)**

(74) Representative: **Hibbert, Juliet Jane Grace et al Kilburn & Strode 20 Red Lion Street London WC1R 4PJ (GB)**

(56) References cited:
EP-A- 1 107 637          EP-A- 1 471 660
WO-A-01/76096           US-A1- 2002 044 527

## Description

The present invention relates generally to the communication of data pursuant to a high-speed data radio communication service, such as an Enhanced Data for GSM Evolution (EDGE) communication service. More particularly, the present invention relates to a method, and an associated apparatus, by which to allocate and to provide for communication of the data at reduced levels of latency. Communication resources are allocated to provide for communication of data of a radio block over multiple carriers and within a reduced time period, e.g., within a single time frame.

## Background of the Invention

Data communication systems are used by which to communicate data and their use is pervasive in modem society. The capability of a data communication system is sometimes defined in terms of its throughput capability due to the significance of the throughput rate at which data is communicated to the performance of a data communication service. High-speed data communication services have historically been performed by way of wireline communication systems. However, the evolution of communication technologies increasingly permits high-speed data communication services to be carried out by way of radio, i.e., wireless, communication systems. Increasingly, data services that necessitate the communication of large amounts of data in short periods of time are able to be performed by way of a radio communication system that provides for the communication of the data at high data throughput rates. With increasingly data intensive communication services, there is a continuing need to provide for radio communication systems that provide for yet higher data throughput rates.

A cellular communication system is exemplary of a radio communication system that increasingly is used by which to communicate data at high data throughput rates. A GSM (Global System for Mobile communications) cellular communication system, for instance, has been developed and widely deployed that provides for the performance of data communication services. Many GSM systems provide for GPRS (General Packet Radio Service), a high-speed data communication service. An extension to GPRS, referred to as EDGE (Enhanced Data for GSM Evolution), is presently undergoing deployment. EDGE communications, in general, adds 8-PSK modulation, incremental redundancy, and adaptive modulation and coding to GPRS communications. And, through these additions, an EDGE-capable communication system provides for communication of data at data throughput rates that are significantly higher than those achievable in GSM/GPRS only communication systems. In spite of improved communication capabilities of an EDGE-capable system, there are ongoing efforts yet further to improve the communication capabilities of communications in such a system. Published patent application documents of United States Patent Application publication number US2002/044527 A1 and of Patent Cooperation Treaty application number WO01/76096, for instance, describe digital radio communication system schemes.

In the existing EDGE communication scheme, a relatively high transmission latency limits communication capabilities. The transmission latency results as, in the existing scheme, data of a radio block is transmitted over multiple TDMA (Time Division Multiple Access) frames of a slotted interface defined in the communication scheme. More particularly, the data of a radio block is transmitted in four bursts occurring over four TDMA frames. And, as a result, to communicate the data of the radio block requires the time period for responding to the four frames in which to communicate the data of the radio block. When the data is communicated pursuant to an acknowledgment scheme, additional time is required in which to acknowledge the reception of the communicated data.

If a manner could be provided by which to reduce the transmission latency of the existing communication scheme, improved effective data throughput rates and improved communication performance would result.

It is in light of this background information related to communication of data in a slotted-interface radio communication system that the significant improvements of the present invention have evolved.

## Brief Description of the Drawings

Figure 1 illustrates a functional block diagram of an exemplary communication system that includes an embodiment of the present invention as a portion thereof.

Figure 2 illustrates a functional block diagram, similar to that shown in Figure 1, but of another exemplary communication system that also includes an embodiment of the present invention as a portion thereof.

Figure 3 illustrates a graphical representation of utilization of the slotted radio air interface of the communication systems shown in Figures 1 and 2 pursuant to exemplary operation of an embodiment of the present invention together with a comparison with a corresponding communication allocation provided in a conventional communication scheme.

Figure 4 illustrates another representation of exemplary communication resource allocation pursuant to operation of an embodiment of the present invention.

Figure 5 illustrates a method flow diagram representative of the method of operation of an embodiment of the present invention.

**Detailed Description**

The present invention, accordingly, advantageously provides a method, and an associated apparatus, for use in the communication of high-speed data to perform a high-speed data radio communication service, such as in the communication of EDGE (Enhanced Data for GSM Evolution) data communicated during operation of an EDGE-capable communication system.

Through operation of an embodiment of the present invention, communication resource allocations are made to provide for the communication of data at reduced levels of latency. Communication resources are allocated to provide for communication of data of a radio block over multiple carriers within a reduced time period, e.g., a single time frame.

By reducing the latency of the communication of the data, improved effective data throughput rates are achievable. Improved communication performance is provided as the reduced latency permits data needed to effectuate a communication service to be communicated within a smaller time period.

Communication resources are allocated to communicate the data of a radio block. While, conventionally, communication resources are allocated upon a single carrier over a time period of four time frames, the communication resources allocated pursuant to operation of an embodiment of the present invention are allocated within a single time frame, across a plurality of radio carriers. Thereby, the data of an entire radio block is communicated within a single time frame, rather than the four time frames over which the resources are conventionally allocated and during which the data of the radio block is conventionally communicated.

In one aspect, a determination is made of how many, and which, radio carriers are available upon which to allocate communication resources. The determination is made, for instance, making use of knowledge of the communication capabilities of the communication stations that are to be parties to a communication session. The knowledge of the communication capability of a remote station, e.g., a mobile station, is provided by a message sent by the mobile station to the network infrastructure to inform the network infrastructure of the communication capability of the mobile station. And, responsive to receipt of the message, allocations are available upon, or limited to, the radio carriers across which the mobile station is capable of receiving, or transmitting, data.

In another aspect, communication resources are allocated both for downlink and uplink communications. Communication resource allocations made at the network infrastructure for uplink communications are communicated to the mobile station for subsequent use by the mobile station for the uplink communications. And, communication resource allocations made for the downlink communications are also communicated to the mobile station to alert the mobile station of the allocations to permit its operation best to detect and operate upon the data, when communicated.

In another aspect, communication resources are assigned and data communications are scheduled at a radio resource control logic layer of the communication system. The communication resource assignments are made responsive to the communication capabilities of the communication stations that are to be involved in the communication of the data and other criteria, such as the availability of communication resources on the radio carriers otherwise available for communications by the communication stations. And, when the resource allocations are assigned, the data scheduler schedules the communication of the data to effectuate its communication to effectuate the communication service. When the communication stations are formed of a plurality of RF transceiver front ends, each operable over a selected radio carrier, control signals are generated at the radio resource control logic layer and provided to the transceiver front ends to cause their operation in conformity with the assigned resources. And, when a communication station is formed of a wideband RF transceiver front end, control signals generated at the radio resource control layer control its operation.

Communication resource allocations are made subject to various constraints, including, e.g., time slots that are allocable, the available RF carriers, time requirements required of the communication stations to tune to different carriers, as well as other criteria.

In general, an embodiment may be implementable in any of various radio communication systems that provide for multiple radio frequency channels using a time slotted protocol for data interchange. A remote communication station operates to receive and decode information communicated thereto on two or more radio frequencies simultaneously. The transmission of the data is controlled through the assignment of communication resources and scheduling of data communications in conformity with the resource assignations.

Data conventionally is communicated over a number of frames that constitute a radio block. This amount of data, through operation of an embodiment of the present invention, is instead communicated within a selected number of time slots of a single time frame. The selected number of time slots corresponds to the number of frames that constitutes a conventionally-defined radio block.

In a further aspect, a communication station that receives data communicated thereto upon the time slots allocated within a single time frame acknowledges receipt pursuant to an acknowledgment scheme, either a positive acknowledgment or a negative acknowledgment communication scheme. In a positive acknowledgment scheme, the acknowledgments are communicated back to a sending communication station within the same time frame as the time frame in which the data is communicated to the receiving station.

In these and other aspects, therefore, a method, and an associated apparatus, is provided for facilitating communication of data by a first communication station. The first communication station is operable pursuant to a communication scheme that provides for mobile allocation index offset. The data is of an amount corresponding to data communicable during a selected number of time slots of a radio block formed across a plurality of time frames. An assignor is adapted to receive an indication of the amount of data to be communicated by the first communication station. The assignor is configured to assign communication resources defined in terms of mobile allocation index offsets across a plurality of radio carriers. A data scheduler is adapted to receive an indication of the communication resources assigned by the assignor. The data scheduler is configured to schedule communication of the data in conformity with the assignations made by the assignor. The schedule of the communication of the data is made by the scheduler providing for completion of the communication of the data within a single time frame of the plurality of time frames. A message generator receives indications of the schedule. And, the message generator generates a message including values representative of the schedule.

The present invention is set out in the independent claims. Some optional features are set out in the claims dependent thereto.

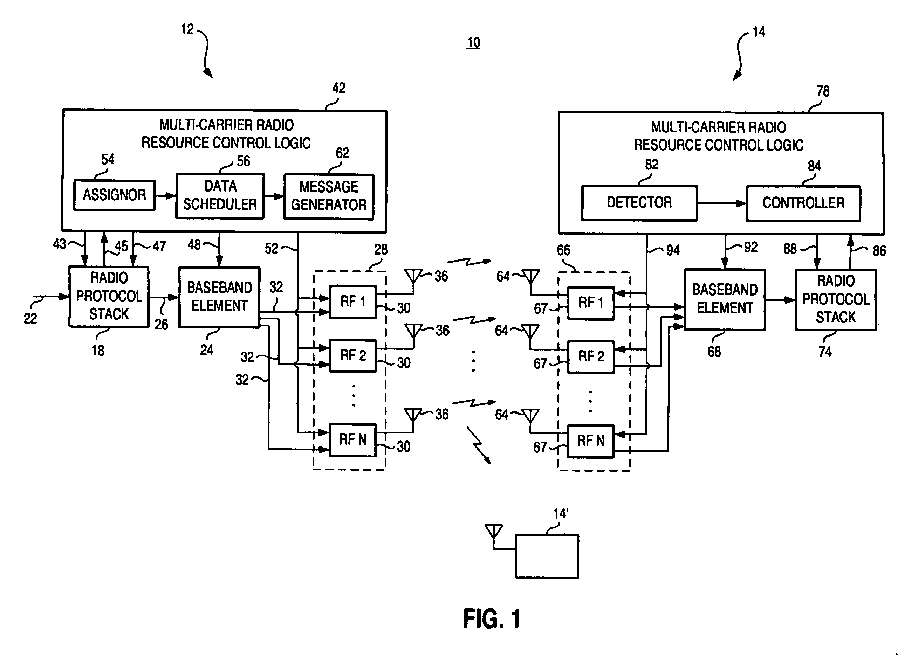

With these and other aspects in mind, reference is first made to Figure 1. Figure 1 illustrates a communication system, shown generally at 10, in which an embodiment of the present invention is operable. In the exemplary implementation, the communication system 10 forms a data radio communication system that operates in general conformity with the operating protocols of a GSM/GPRS/EDGE (Global System for Mobile communications/General Packet Radio Service/ Enhanced Data for GSM Evolution) communication scheme. The communication system, however, is analogously also representative of other slotted-interface communication systems. While the following description shall describe the communication system in terms of its exemplary implementation, the teachings of the present invention are analogously applicable for implementation in other types of communication systems, operable pursuant to other operating protocols.

The communication system 10 includes communication stations 12 and 14. The communication station 12 is representative of a network station. The network station is formed of elements of a network part of the communication system, and the communication station shall, at times, be referred to herein as a network station. The communication station 14 is representative of a mobile station, and the communication station 14 shall, at times, be referred to herein as a mobile station 14.

A communication station 14' is also shown in Figure 1. The communication station 14' represents another mobile station that is capable of communicating with the network station 12. Separate point-to-point communication sessions, as well as multicast communications, are possible between the network station 12 and the communication stations 14 and 14'. And, the communication system defines a multiple access communication system.

Any of the communication stations 12 and 14 are capable of generating and communicating EDGE data pursuant to performance of an EDGE data service. Exemplary operation of the communication system shall be described with respect to downlink communication of data, i.e., data originated at the network station and communicated to the mobile station. Operation of the communication system in an uplink direction, i.e., from the mobile station to the network station is analogous.

The EDGE/GPRS/GSM operating protocols include definitions of an EDGE channel structure. The EDGE channel structure defines a slotted interface pursuant to a TDMA (Time Division Multiple Access) scheme in which groups of eight time slots forms a frame. And, a radio block is defined as a group of four frames. Each frame is of a 4.615 ms time length, and each time slot of the frame is one-eighth of such length or 577 ms. As a radio block is formed of four time frames, the time length of a radio block is 4 times 4.615 ms or 18.46 ms. When communication resources are allocated for the communication of data of a radio block, conventionally, at least 18.46 ms are required to communicate the data. This defines the transmission latency of EDGE communications. Further latency exists if the receiving station transmits an acknowledgment, such as pursuant to an uplink state flag (USF) mechanism also set forth in the aforementioned protocols. The acknowledgment is returned in the next TDMA frame following the reception of the full radio block. When an acknowledgment is utilized, five TDMA frames, or 20.824 ms time lengths corresponding to five TDMA frames of 4.615 ms time lengths need to be completed. An entire cycle requires nine, four plus four plus four plus one, time frames, or 41.435 ms time length extending between the beginning of the reception of a block of data to the end of transmission of a radio block to the end of transmission of an acknowledgment block. As the transmission latency is relatively lengthy, the latency forms a constraint on the communication performance of a conventional EDGE-capable communication system.

The communication stations 12 and 14 are functionally represented in Figure 1. The communication stations are formed of functional elements that are implementable in any desired manner. Also, the functions performed by the various functional elements are not necessarily positioned together at a single physical entity, but, instead, can be distributed across two or more physical entities. For example, the elements shown to form portions of the network station 12 need not be positioned at a single network entity, but rather can be distributed across more than one entity, such as, for instance, across a base station controller and a base transceiver station of the network.

The transmit chain portion of the network station 12 is shown in Figure 1. The network station includes a radio protocol stack 18 to which user application data is applied by way of the line 22. The application data is for communication to one or more mobile stations 14 pursuant to one or more EDGE communication sessions. The radio protocol stack includes various logical layers including a radio resource management (RRM) layer. Data is provided by the radio protocol stack to a baseband element 24 by way of the lines 26. The baseband element performs various baseband operations including baseband processing, modulation, and channel coding.

The network station also includes a radio element 28 formed of a plurality of radio frequency transceiver front ends (RF 1 - RF N) 30 to which the data, once operated upon by the baseband element, is provided by way of the lines 32. The network station includes N RF transceiver front ends 28. Each of the transceiver front ends is coupled to an antenna transducer 36 that operates to transduce data into electromagnetic form for communication by way of the slotted radio air interface to the one or more mobile stations 14. That is to say, the network station is capable of communicating on N carriers, such as pursuant to a mobile allocation index offset (MAIO) scheme. The mobile station 14, e.g., is similarly configured and operable.

The network station 12 also includes a multi-carrier radio resource control logic element 42 of an embodiment of the present invention. The logic element 42 is functionally coupled to the radio protocol stack 18, here by way of the lines 43, 45, and 47, to the baseband element 24 by way of the lines 48, and to the transceiver front ends 28 of the radio element by way of the lines 52. The logic element performs various functions and, in the exemplary implementation, is embodied at the radio resource management logical layer.

The logic element 42 includes an assignor 54, a data scheduler 56, and a message generator 62. The functions performed by the parts of the logic element 42 are carried out in any desired manner, such as, for example, by algorithms executable by processing circuitry.

The assignor receives indications of the data that is to be communicated pursuant to performance of a communication service during a communication session, e.g., here, downlink data to be communicated by the network station to one or more mobile stations. The indication of the characteristic includes, for instance, the amount of data that is to be communicated or other indication that facilitates assignment by the assignor of the channel resource allocations or assignments. Channel resource assignments made by the assignor are provided to the data scheduler 56. The data scheduler operates to schedule data communications in conformity with the assignments made by the assignor. Appropriate control signals are provided to the RF transceiver front ends 30 and to the baseband element to control their respective operation to provide for the communication of the data scheduled by the data scheduler. Data scheduling information is here also provided to the data scheduler by the radio protocol stack 18. The message generator 62 is also provided with indications of the communication resource assignments and data schedule made by the data scheduler. The message generator operates to generate a message for communication to the mobile station to alert the mobile station of the resource assignations and schedule made by the data scheduler. The message is here provided by way of the line 43 to the radio protocol stack, subsequently to be operated upon by the baseband element and caused to be communicated by one or more of the transceiver front ends 30.

The receive chain portion of the mobile station 14 is illustrated in the figure. The mobile station includes antenna transducers 64, an RF element 66 formed of RF transceiver front ends 67, a baseband element 68, and a radio protocol stack 74.

The mobile station includes a multi-carrier radio resource control logic element 78, also of an embodiment of the present invention. The element 78 includes a detector 82 and a controller 84. The radio resource control logic element is coupled, at least functionally, to the radio protocol stack, here indicated by way of the lines 86 and 88, to the baseband element by way of the line 92, and to the RF transceiver front ends of the RF element by way of the lines 94.

The detector 82 operates to detect a message generated by the message generator 62 of the network station and communicated to the mobile station. And, the detector operates to extract values contained in the message or otherwise operates to identify the channel assignations or data schedule contained in the communicated message. Detections made by the detector are provided to the controller 84. The controller operates to control operation of the mobile station responsive to the values detected in the message. For downlink communications, the controller causes operation of the mobile station in a manner best to receive the subsequently communicated EDGE data. And, for uplink communications, the controller causes operation of the mobile station to communicate best uplink data that is subsequently communicated by the mobile station.

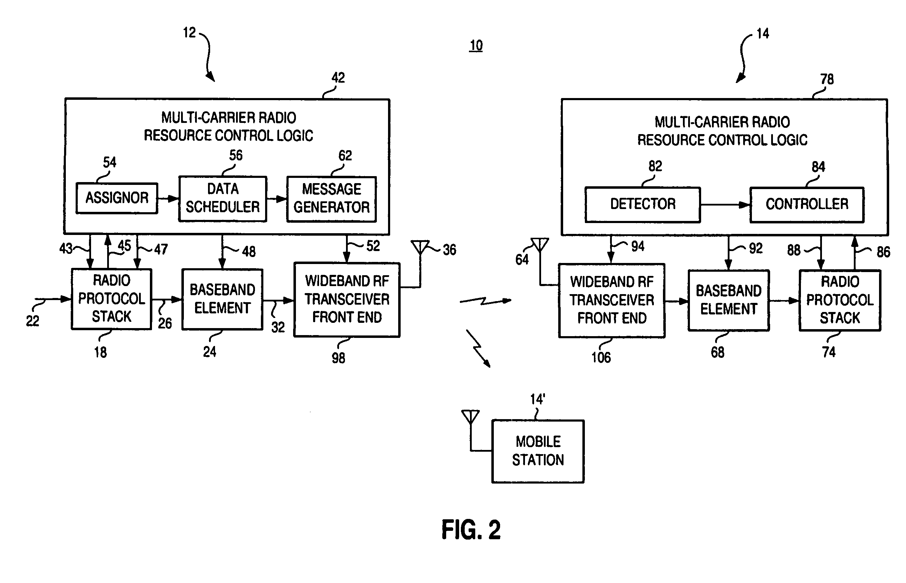

Figure 2 illustrates a communication system, similar to that shown in Figure 1, also formed of a set of communication stations 12 and 14. Elements of the communication system 10 shown in Figure 2 that correspond to those forming the communication system shown in Figure 1 are commonly-referenced. The function, operation, and connection of such commonly-referenced elements correspond with their counterparts shown in Figure 1. Reference to the description of Figure 1 provides the details of their function, operation, and connection.

Here, in contrast to the communication stations 12 and 14 shown in Figure 1, the communication stations include wideband RF transceiver front ends 98 and 106. That is to say, the network station includes a single radio frequency transmitter 98 that transmits multiple, contiguous radio frequency channels converted from a single baseband signal. And, the mobile station 14 includes a single radio frequency receiver 106 having a radio frequency and baseband bandwidth sufficiently wide to receive more than one contiguous radio frequency channel and associated baseband information.

During operation of the multi-carrier radio resource control logic element 42, communication resource allocations are made to minimize the number of burst periods assigned over all radio frequency carriers to both downlink and uplink time slots, as appropriate, subject to various constraints. First, the time slots must be allocable; that is, the time slots are not used for other traffic communications by other sets of communication stations pursuant to other communication sessions.

Second, the time slots that are allocated are allocated over the sum of all allocable burst periods and the sum of all available mobile-station, radio frequency receiver elements is greater than or equal to the number of burst data that are required for the transmission of one radio block.

Third, the time slots are allocated over the sum of all allocable burst periods and the sum of all available mobile station radio frequency receivers MOD the number of burst data that are required for transmission of one radio block is equal to zero. That is to say, only full blocks are allocated, not partial radio blocks.

Fourth, assignments are further dependent upon the minimum latency required to tune the RF stage, either the plurality of transceiver front end elements or the wideband transceivers and become ready either to receive on another carrier frequency or transmit is observed.

Fifth, the resource assignations and data schedule is further dependent upon the minimum latency period required to tune the RF stage, howsoever implemented, and become ready to receive on a measurement frequency. And, sixth, a final constraint is that a measurement frequency is not equal to a transmit frequency.

The above decisions and constraints are represented mathematically by:

$$MIN : \sum_{b=1}^{Nb} B_b u_b ; u \in \{0,1\}$$

$$ST : u = \begin{cases} a = 1 \wedge \left[ \left( \sum_{b=1}^{Nb} \sum_{R=1}^{N_R} T_{bR} \geq d \right) \wedge \left( \sum_{b=1}^{Nb} \sum_{R=1}^{N_R} T_{bR} \, MOD \, d = 0 \right) \wedge L_T \geq B \wedge L_M \geq B \wedge f_m \neq f_t \right] : 1 \\ Else : 0 \end{cases}$$

Where:

b = burst period
R = RF deck number (both transmit and receive)
*Nb* = Maximum burst periods possible in allocation
*Nr* = Maximum number of RF decks available for simultaneous reception in mobile terminal
$B_b$ = Burst period (for GSM/EDGE = 577 $\mu$s) at timeslot number "b"
$T_{bR}$ = Radio resource of timeslot at timeslot number "b" on RF deck "R" for mobile receiver
$u_b$ = Utilization of timeslot "b" according to constraints (Boolean)
*a* = Timeslot availability for allocation to mobile downlink (Boolean)
d = Number of data bursts required per radio block (for GSM/EDGE = 4)
$L_T$ = Minimum latency required to switch between last allocated receive slot and either i) another allocated receive slot on another RF carrier or ii) the allocated transmit slot (for GSM/EDGE = 1 burst period = 577 $\mu$s)
$L_M$ = Minimum latency required to switch between last allocated transmit slot and measurement slot (for GSM/EDGE = 1 burst period = 577 $\mu$s)

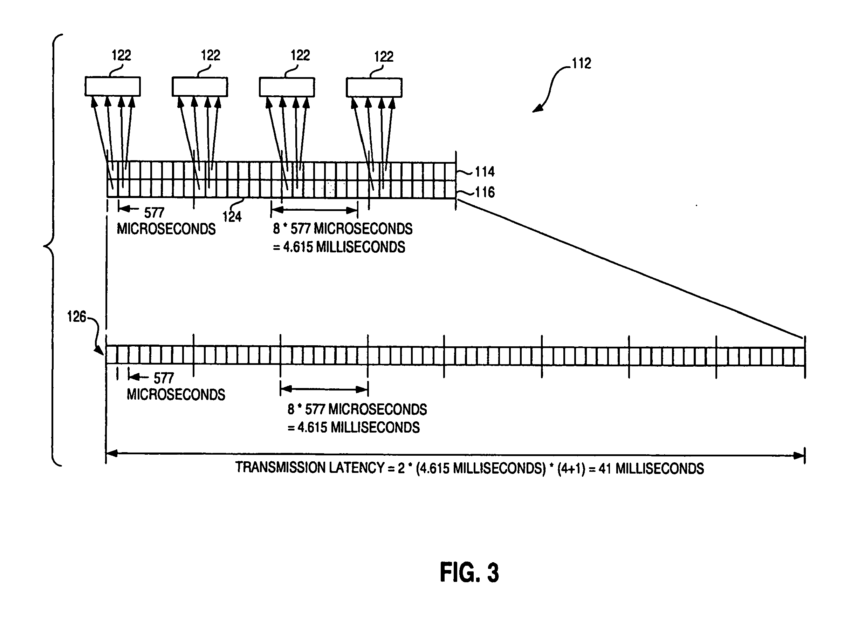

Figure 3 illustrates a representation, shown generally at 112, of exemplary resource allocations made pursuant to operation of an embodiment of the present invention. Here, resources are allocated upon two radio carriers 114 and 116. Four time frames, each formed of eight time slots on each of the two radio carriers is shown in the figure. Time slot assignments are made on the first and second time slots of both of the radio carriers 114 and 116. That is to say, during the time period corresponding to a single time frame, four time slots are allocated for communication of data. The four time slots provide for the communication of data of an amount corresponding to the data that is conventionally communicated over a radio block defined over four time frames. The blocks 122 are representative of the downlink data block corresponding to the time slots allocated on the separate carriers 114 and 116.

In the exemplary representation, acknowledgments are further returned acknowledging receipt of the data communicated upon the allocated time slots. The time slots 124, within a single time frame, represent time slots within which the exemplary uplink acknowledgments are returned to the network station.

Thereby, within the time period corresponding to a single time frame, data constituting the data of an entire radio block is communicated to the mobile station, and the mobile station acknowledges receipt of the data. The coding of an entire block in an acknowledgment of its reception and decoding, within a single TDMA frame period, is thereby provided.

Further represented in the figure is an exemplary resource allocation of a radio block in conventional practice, indicated at 126. In conventional operation, a single time slot is allocated within a single time frame, and time slots over four time frames are allocated upon a single radio carrier. And, when acknowledgments are provided, the acknowledgments are provided in subsequent time frames. Comparison of the allocations indicates the reduced latency provided through operation of an embodiment of the present invention.

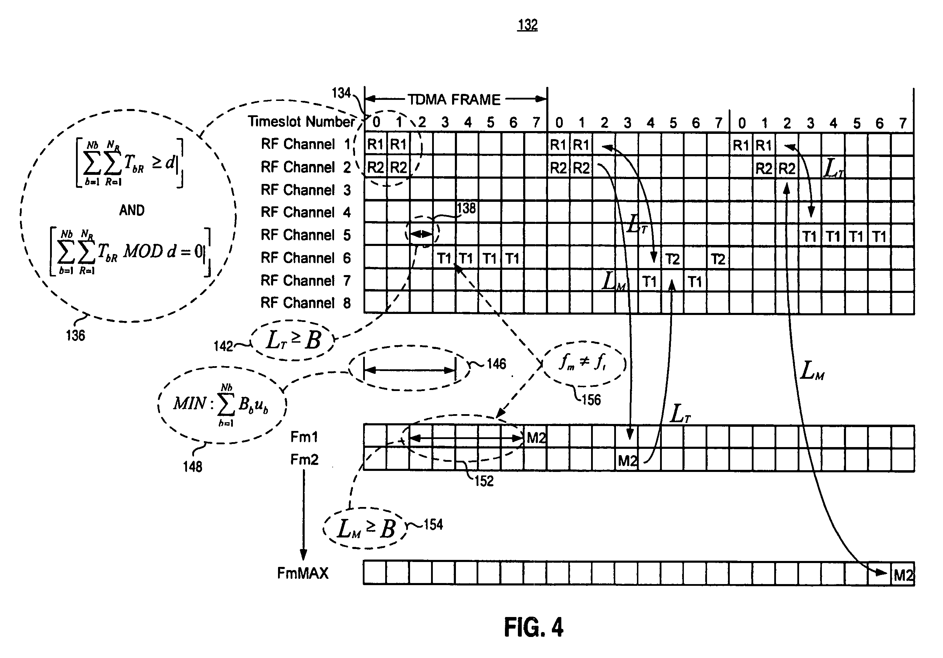

Figure 4 illustrates another representation, shown generally at 132, here of a two-receiver mobile station and resource allocations over three time frame periods, each time frame period formed of eight time slots, numbered 0-7 in Figure 4. As indicated by the circles 134 and 136, the resources allocated during the first two time slots of the RF channel carriers 1 and 2 satisfy the constraint indicated mathematically in the circle 136. Subsequent transmit allocations in time slots identified as time slots 3, 4, 5, and 6 are allocated with the latency constraint indicated by the circles 138 and 142. The additional constraints are indicated by the circles 146 and 148, 152 and 154, and 156.

Again, analysis of the resource allocations indicate that the data corresponding to an entire radio block is communicated, and acknowledged, within a single time frame. Additional exemplary allocations are indicated in the second and third time frames of the illustration of Figure 4.

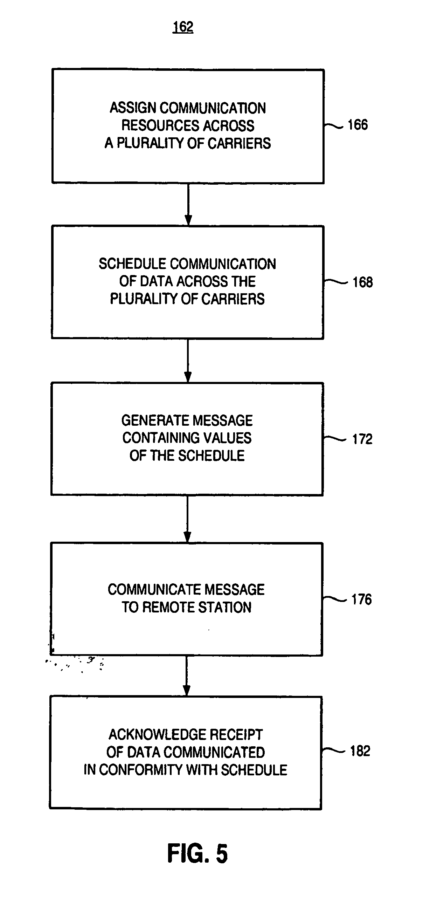

Figure 5 illustrates a method flow diagram, shown generally at 162, representative of the method of operation of an embodiment of the present invention. The method facilitates communication of data by a first communication station pursuant to a communication scheme that provides for mobile allocation index offset. The data is of an amount corresponding to the data communicable during a selected number of time slots of a radio block formed across a plurality of time frames.

First, and as indicated by the block 166, communication resources are assigned. The communication resources that are assigned are assigned across a plurality of radio carriers.

Then, and as indicated by the block 168, communication of the data is scheduled in conformity with the assignations made during the operation of assignment. The schedule of the communication of the data provides for completion of the communication of the data within a single time frame of the plurality of time frames. Subsequently, and as indicated by the block 172, a message is generated. The message includes values representative of the schedule. The message, when communicated, identifies the schedule to a remote station. And, as indicated by the block 176, the message is communicated to the remote station. And, as indicated by the block 182, an acknowledgment is returned by the remote station to acknowledge receipt of data subsequently communicated in conformity with the schedule.

As the resources are assigned, the data is scheduled for communication, and is communicated, with lessened levels of latency, improved communication performance is provided.

The previous descriptions are of preferred examples for implementing the invention, and the scope of the invention should not necessarily be limited by this description. The scope of the present invention is defined by the following claims.

**Claims**

1. Apparatus for facilitating communication of data by a first communication station operable pursuant to a communication scheme that provides for mobile allocation index offset equating to a specific radio carrier, the data of an amount corresponding to data communicable during a selected number of time slots of a radio block formed across a plurality of time frames, said apparatus comprising:

   an assignor (54) adapted to receive an indication of the amount of data to be communicated by the first communication station, said assignor configured to assign communication resources across a plurality of radio carriers;
   a data scheduler (56) adapted at least to receive an indication of the communication resources assigned by said assignor (54), said data scheduler (56) configured to schedule communication of the data in conformity with the assignations made by said assignor (54), the schedule of the communication of the data made by said scheduler (56) providing for completion of the communication of the data within a single time frame of the plurality of time frames; and
   a message generator (62) adapted to receive indications of the schedule scheduled by said data scheduler (56), said message generator (62) configured to generate a message including values representative of the schedule, the message, when communicated, identifying to a remote station the schedule.

2. The apparatus of claim 1 wherein said assignor (54) is further adapted to receive an indication of which radio carriers, at least in terms of mobile allocation index offsets, are available upon which to communicate the data, and wherein the communication resources assigned by said assignor (54) are further responsive to the indication of which radio carriers are available.

3. The apparatus of claim 1 wherein said scheduler (56) is further adapted to receive an indication of communication resource availability and wherein the schedule of the communication scheduled by said scheduler (56)is further responsive to the communication resource availability.

4. The apparatus of claim 1 wherein the schedule of the communication scheduled by said scheduler (56) further is made responsive to a communication station minimum latency period.

5. The apparatus of claim 4 wherein the minimum latency period responsive to which the schedule is scheduled by said scheduler (56) comprises the minimum latency period required to change between mobile allocation index offsets.

6. The apparatus of claim 4 wherein the minimum latency period responsive to which the schedule is scheduled by said scheduler (56) comprises the minimum latency period required to change between transmit and receive modes of operation.

7. The apparatus of claim 4 wherein the minimum latency period responsive to which the schedule is scheduled by said scheduler (56) comprises the minimum latency period required to change between a communication mode and a measurement mode.

8. The apparatus of claim 1 wherein the radio block is formed across a number of time frames and wherein the selected number of time slots comprises the number of frames required to communicate one radio block, the schedule of the communication scheduled by said scheduler (56) scheduling an exact number of time slots within the single time frame for communication of one radio block.

9. The apparatus of claim 1 wherein the communication resources assigned by said assignor (54) comprise time slots of a number at least equal to the selected number of time slots.

10. The apparatus of claim 1 wherein the schedule of the communication provides both for completion of the communication of the data within the single time frame for acknowledgment of successful delivery of the data.

11. Apparatus for a communication station (14) operable pursuant to communication of data in a communication scheme that provides for mobile allocation index offset, the data of an amount corresponding to data communicable during a selected number of time slots of a radio block formed across a plurality of time frames, said apparatus comprising:

a detector (82) configured to detect an allocation message delivered to the communication station, the allocation message identifying a schedule of communication resources allocated to the communication station pursuant to the communication of the data, the schedule of the communication of the data providing for completion of the communication of the data within a single time frame of the plurality of time frames; and a controller (84) adapted to receive an indication of detections made by said detector, said controller configured to generate a control signal responsive to detections made by said detector, the control signal controlling operation of the communication station.

12. The apparatus of claim 12 further comprising an acknowledgment message generator, said acknowledgment message generator configured to generate an acknowledgment message to acknowledge receipt of data, the acknowledgment message sent within the time frame in which the data is received.

13. A method (162) for facilitating communication of data by a first communication station pursuant to a communication scheme that provides for mobile allocation index offset, the data of an amount corresponding to data communicable during a selected number of time slots of a radio block formed across a plurality of time frames, said method comprising the operations of:

assigning (166) communication resources defined in terms of mobile allocation index offsets across a plurality of radio carriers;
scheduling (168) communication of the data in conformity with assignations made during said operation of assigning, the schedule of the communication of the data providing for completion of the communication of the data within a single time frame of the plurality of time frames[[.]]; and

generating (172) a message including values representative of the schedule, the message, when communicated, identifying the schedule to a remote station.

14. The method (162) of claim 13 further comprising the operation, prior to said operation of assigning, of detecting an indication of which radio carriers, at least in terms of mobile allocation index offsets, are available upon which to communicate the data, and wherein the communication resources assigned during said operation of assigning (166) are further responsive to the indication of which radio carriers are available.

15. The method (162) of claim 13 further comprising the operation of detecting an indication of communication resource availability and wherein the schedule of the communication made during said operation of scheduling (168) is responsive, in part, to the communication resource availability.

16. The method (162) of claim 13 wherein the schedule of the communication made during said operation of scheduling (168) is further responsive to a communication station minimum latency period.

17. The method (162) of claim 13 wherein the radio block is formed across a number of time frames and wherein the selected number of time slots comprises the number of frames required to communicate one radio block, the schedule of the communication scheduled during said operation of scheduling comprising an exact number of time slots within the single time frame for communication of one radio block.

18. The method (162) of claim 13 comprising the further operation, at a remote station, of acknowledging receipt (182) of the data, once communicated thereto, acknowledgments returned to the first communication station within a time frame of delivery of the data.


**Patentansprüche**

1. Vorrichtung zur Erleichterung einer Kommunikation von Daten durch eine erste Kommunikationsstation, die betriebsfähig ist gemäß einem Kommunikationsschema, das einen mobilen Zuteilungs-Index-Offset vorsieht, entsprechend einem spezifischen Funkträger, wobei die Daten eine Menge haben, die Daten entspricht, die während einer ausgewählten Anzahl von Zeitschlitzen eines Funkblocks kommunizierbar sind, der über eine Vielzahl von Zeitrahmen gebildet wird, wobei die Vorrichtung aufweist:

   einen Zuweiser (54), der ausgebildet ist, eine Anzeige über die Menge von Daten zu empfangen, die durch die erste Kommunikationsstation zu kommunizieren sind, wobei der Zuweiser konfiguriert ist, Kommunikationsressourcen über eine Vielzahl von Funkträgern zuzuweisen; und

   einen Daten-Scheduler (56), der ausgebildet ist, zumindest eine Anzeige über die Kommunikationsressourcen zu empfangen, die durch den Zuweiser (54) zugewiesen werden, wobei der Daten-Scheduler (56) konfiguriert ist, eine Kommunikation der Daten in Übereinstimmung mit den Zuweisungen, die durch den Zuweiser (54) gemacht wurden, zu planen (schedule), wobei der Zeitplan bzw. Schedule der Kommunikation der Daten, der durch den Scheduler (56) aufgestellt wird, einen Abschluss der Kommunikation der Daten innerhalb eines einzelnen Zeitrahmens aus der Vielzahl von Zeitrahmen vorsieht, und

   einen Nachrichten-Generator (62), der ausgebildet ist, Anzeigen des Schedules zu empfangen, der durch den Daten-Scheduler (56) geplant wird, wobei der Nachrichten-Generator (62) ausgebildet ist, eine Naclu-icht zu erzeugen mit Werten, die repräsentativ für den Schedule sind, wobei die Nachricht, wenn kommuniziert, den Schedule für eine entfernte Station identifiziert.

2. Vorrichtung gemäß Anspruch 1, wobei der Zuweiser (54) weiter ausgebildet ist, eine Anzeige zu empfangen, welche der Funkträger, zumindest hinsichtlich von mobilen Zuteilungs-Index-Offsets, verfügbar sind, um auf diesen die Daten zu kommunizieren, und wobei die Kommunikationsressourcen, die von dem Zuweiser (54) zugewiesen werden, weiter abhängig sind von der Anzeige, welche Funkträger verfügbar sind.

3. Vorrichtung gemäß Anspruch 1, wobei der Scheduler (56) weiter ausgebildet ist, eine Anzeige über eine Kommunikationsressourcen-Verfügbarkeit zu empfangen und wobei der Schedule der Kommunikation, der durch den Scheduler (56) geplant wird, weiter abhängig ist von der Kommunikationsressourcen-Verfügbarkeit.

4. Vorrichtung gemäß Anspruch 1, wobei der Schedule der Kommunikation, der durch den Scheduler (56) geplant wird, abhängig ist von einer Konununikationsstations-Minimum-Latenzzeitperiode.

5. Vorrichtung gemäß Anspruch 4, wobei die Minimum-Latenzzeitperiode, die abhängig davon ist, welcher Schedule durch den Scheduler (56) geplant ist, die Minimum-Latenzzeitperiode aufweist, die erforderlich ist, um zwischen mobilen Zuteilungs-Index-Offsets zu wechseln.

6. Vorrichtung gemäß Anspruch 4, wobei die Minimum-Latenzzeitperiode, die abhängig davon ist, welcher Schedule durch den Scheduler (56) geplant ist, die Minimum-Latenzzeitperiode aufweist, die erforderlich ist, um zwischen Sende- und Empfangs-Betriebsmodi zu wechseln.

7. Vorrichtung gemäß Anspruch 4, wobei die Minimum-Latenzzeitperiode, die abhängig davon ist, welcher Schedule durch den Scheduler (56) geplant ist, die Minimum-Latenzzeitperiode aufweist, die erforderlich ist, um zwischen einem Kommunikationsmodus und einem Messmodus zu wechseln.

8. Vorrichtung gemäß Anspruch 1, wobei der Funkblock gebildet wird über eine Anzahl von Zeitrahmen und wobei die ausgewählte Anzahl von Zeitschlitzen die Anzahl von Rahmen aufweist, die erforderlich sind, um einen Funkblock zu kommunizieren, wobei der Schedule der Kommunikation, der durch den Scheduler (56) geplant wird, eine genaue Anzahl von Zeitschlitzen innerhalb des einzelnen Zeitrahmens für eine Kommunikation eines Funkblocks plant.

9. Vorrichtung gemäß Anspruch 1, wobei die Kommunikationsressourcen, die durch den Zuweiser (54) zugewiesen werden, Zeitschlitze in einer Anzahl aufweisen, die zumindest gleich zu der gewählten Anzahl von Zeitschlitzen ist.

10. Vorrichtung gemäß Anspruch 1, wobei der Schedule der Kommunikation sowohl eine Vollendung der Kommunikation der Daten in dem einzelnen Zeitrahmen als auch eine Bestätigung einer erfolgreichen Lieferung der Daten vorsieht.

11. Vorrichtung für eine Kommunikationsstation (14), die betriebsfähig ist gemäß einer Kommunikation von Daten in einem Kommunikationsschema, das einen mobilen Zuteilungs-Index-Offset vorsieht, wobei die Daten eine Menge haben, die Daten entspricht, die während einer ausgewählten Anzahl von Zeitschlitzen eines Funkblocks kommunizierbar sind, der über eine Vielzahl von Zeitrahmen gebildet wird, wobei die Vorrichtung aufweist:

einen Erfasser bzw. Detektor (82), der konfiguriert ist, eine Zuteilungsnachricht zu erfassen, die an die Kommunikationsstation geliefert wird, wobei die Zuteilungsnachricht einen Schedule von Kommunikationsressourcen identifiziert, die der Kommunikationsstation zugeteilt sind gemäß der Kommunikation der Daten, wobei der Schedule der Kommunikation der Daten ein Vollenden der Kommunikation der Daten in einem einzelnen Zeitrahmen der Vielzahl von Zeitrahmen vorsieht: und
eine Steuervorrichtung (84), die ausgebildet ist, eine Anzeige von Erfassungen zu empfangen, die durch den Detektor gemacht werden, wobei die Steuervorrichtung konfiguriert ist, ein Steuersignal zu erzeugen als Reaktion auf Erfassungen, die durch den Detektor gemacht werden, wobei das Steuersignal einen Betrieb der Kommunikationsstation steuert.

12. Vorrichtung gemäß Anspruch 12, die weiter aufweist einen Bestätigungsnachricht-Generator, wobei der Bestätigungsnachricht-Generator konfiguriert ist, eine Bestätigungsnachricht zu erzeugen, um den Empfang von Daten zu bestätigen, wobei die Bestätigungsnachricht in dem Zeitrahmen gesendet wird, in dem die Daten empfangen werden.

13. Verfahren (162) zur Erleichterung einer Kommunikation von Daten durch eine erste Kommunikationsstation gemäß einem Kommunikationsschema, das einen mobilen Zuteilungs-Index-Offset vorsieht, wobei die Daten eine Menge haben, die Daten entspricht, die während einer ausgewählten Anzahl von Zeitschlitzen eines Funkblocks kommunizierbar sind, der über eine Vielzahl von Zeitrahmen gebildet wird, wobei das Verfahren die Operationen aufweist:

Zuweisen (166) von Kommunikationsressourcen, definiert hinsichtlich mobilen Zuteilungs-Indes-Offsets, über eine Vielzahl von Funkträgern;
Planen bzw. Scheduling (168) einer Kommunikation der Daten in Übereinstimmung mit Zuweisungen, die während der Operation des Zuweisens gemacht wurden, wobei der Schedule der Kommunikation der Daten eine Vollendung der Kommunikation der Daten innerhalb eines einzelnen Zeitrahmens aus der Vielzahl von Zeitrahmen vorsieht; und
Erzeugen (172) einer Nachricht mit Werten, die repräsentativ für den Schedule sind, wobei die Nachricht, wenn kommuniziert, den Schedule für eine entfernte Station identifiziert.

**14.** Verfahren (162) gemäß Anspruch 13, das weiter die Operation aufweist, vor der Operation des Zuweisens, eines Erfassens einer Anzeige, welche der Funkträger, zumindest hinsichtlich von mobilen Zuteilungs-Index-Offsets, verfügbar sind, um auf diesen die Daten zu kommunizieren, und wobei die Kommunikationsressourcen, die während der Operation des Zuweisens (166) zugewiesen werden, weiter abhängig sind von der Anzeige, welche Funkträger verfügbar sind.

**15.** Verfahren (162) gemäß Anspruch 13, das weiter die Operation aufweist eines Erfassens einer Anzeige über eine Kommunikationsressourcen-Verfügbarkeit und wobei der Schedule der Kommunikation, der während der Operation des Schedulings (168) gemacht wird, abhängig ist zum Teil von der Kommunikationsressourcen-Verfügbarkeit.

**16.** Verfahren (162) gemäß Anspruch 13, wobei der Schedule der Kommunikation, der während der Operation des Schedulings (168) gemacht wird, weiter abhängig ist von einer Kommunikationsstations-Minimum-Latenzzeitperiode.

**17.** Verfahren (162) gemäß Anspruch 13, wobei der Funkblock gebildet wird über eine Anzahl von Zeitrahmen und wobei die ausgewählte Anzahl von Zeitschlitzen die Anzahl von Rahmen aufweist, die erforderlich sind, um einen Funkblock zu kommunizieren, wobei der Schedule der Kommunikation, der während der Operation des Schedulings gemacht wird, eine genaue Anzahl von Zeitschlitzen innerhalb des einzelnen Zeitrahmens für eine Kommunikation eines Funkblocks aufweist.

**18.** Verfahren (162) gemäß Anspruch 13, das an einer entfernten Station die weitere Operation aufweist eines Bestätigens des Empfangs (182) der Daten, sobald dorthin kommuniziert, wobei Bestätigungen an die erste Kommunikationsstation in einem Zeitrahmen der Lieferung der Daten zurückgesendet werden.

## Revendications

**1.** Appareil destiné à faciliter la communication de données par une première station de communication en mesure de fonctionner selon un mécanisme de communication qui fournit un décalage d'index d'attribution mobile équivalent à une porteuse radio spécifique, la quantité des données correspondant à des données pouvant être communiquées au cours d'un nombre sélectionné de créneaux temporels d'un bloc radio formé sur une pluralité de trames temporelles, ledit appareil comprenant :

un moyen d'attribution (54), conçu pour recevoir une indication de la quantité de données à communiquer par la première station de communication, ledit moyen d'attribution étant configuré pour attribuer des ressources de communication sur une pluralité de porteuses radio ;
un ordonnanceur de données (56), conçu au moins pour recevoir une indication des ressources de communication attribuées par ledit moyen d'attribution (54), ledit ordonnanceur de données (56) étant configuré pour ordonnancer la communication des données en conformité avec les attributions réalisées par ledit moyen d'attribution (54), le programme de communication des données établi par ledit ordonnanceur (56) prévoyant d'achever la communication des données au sein d'une unique trame temporelle sur la pluralité de trames temporelles ; et
un générateur de message (62), conçu pour recevoir des indications du programme établi par ledit ordonnanceur de données (56), ledit générateur de message (62) étant configuré pour produire un message qui comprend des valeurs représentatives du programme, le message, après sa communication, identifiant le programme pour une station distante.

**2.** Appareil selon la revendication 1, dans lequel ledit moyen d'attribution (54) est en outre conçu pour recevoir une indication sur les porteuses radio, au moins en termes de décalages d'index d'allocation mobiles, qui sont disponibles pour y communiquer des données et dans lequel les ressources de communication attribuées par ledit moyen d'attribution (54) tiennent en outre compte de l'indication des porteuses radio disponibles.

**3.** Appareil selon la revendication 1, dans lequel ledit ordonnanceur (56) est en outre conçu pour recevoir une indication de disponibilité des ressources de communication et dans lequel le programme de communication établi par ledit ordonnanceur (56) tient compte en outre de la disponibilité des ressources de communication.

**4.** Appareil selon la revendication 1, dans lequel le programme de communication établi par ledit ordonnanceur (56) tient compte en outre d'une période de latence minimale de la station de communication.

5.  Appareil selon la revendication 4, dans lequel la période de latence minimale sur la base de laquelle le programme est établi par ledit ordonnanceur (56) comprend la période de latence minimale nécessaire pour changer de décalage d'index d'attribution mobile.

6.  Appareil selon la revendication 4, dans lequel la période de latence minimale sur la base de laquelle le programme est établi par ledit ordonnanceur (56) comprend la période de latence minimale nécessaire pour commuter entre des modes de fonctionnement en émission et en réception.

7.  Appareil selon la revendication 4, dans lequel la période de latence minimale sur la base de laquelle le programme est établi par ledit ordonnanceur (56) comprend la période de latence minimale nécessaire pour commuter entre un mode de communication et un mode de mesure.

8.  Appareil selon la revendication 1, dans lequel le bloc radio est formé sur un certain nombre de trames temporelles et dans lequel le nombre sélectionné de créneaux temporels comprend le nombre de trames nécessaires pour la communication d'un bloc radio, le programme de communication établi par ledit ordonnanceur (56) ordonnançant un nombre exact de créneaux temporels dans l'unique trame temporelle pour la communication d'un bloc radio.

9.  Appareil selon la revendication 1, dans lequel les ressources de communication attribuées par ledit moyen d'attribution (54) comprennent des créneaux temporels en un nombre au moins égal au nombre sélectionné de créneaux temporels.

10. Appareil selon la revendication 1, dans lequel le programme de communication prévoit l'achèvement de la communication des données sur l'unique trame temporelle pour accuser bonne réception des données.

11. Appareil pour une station de communication (14), en mesure de communiquer des données dans un mécanisme de communication qui fournit un décalage d'index d'attribution mobile, la quantité des données correspondant aux données pouvant être communiquées pendant un nombre sélectionné de créneaux temporels d'un bloc radio formé sur une pluralité de trames temporelles, ledit appareil comprenant :

    un détecteur (82), configuré pour détecter un message d'attribution envoyé à la station de communication, le message d'attribution identifiant un programme de ressources de communication attribuées à la station de communication pour la communication des données, le programme de communication des données prévoyant l'achèvement de la communication des données au cours d'une unique trame temporelle parmi la pluralité de trames temporelles ; et
    un contrôleur (84), conçu pour recevoir une indication des détections opérées par ledit détecteur, ledit contrôleur étant configuré pour produire un signal de commande en réponse aux détections opérées par ledit détecteur, le signal de commande commandant le fonctionnement de la station de communication.

12. Appareil selon la revendication 12, comprenant en outre un générateur de message d'accusé de réception, ledit générateur de message d'accusé de réception étant configuré pour produire un message d'accusé de réception afin d'accuser réception des données, le message d'accusé de réception étant envoyé dans la trame temporelle au cours de laquelle les données ont été reçues.

13. Procédé (162) destiné à faciliter la communication de données par une première station de communication en mesure de fonctionner selon un mécanisme de communication qui fournit un décalage d'index d'attribution mobile, la quantité des données correspondant à des données pouvant être communiquées au cours d'un nombre sélectionné de créneaux temporels d'un bloc radio formé sur une pluralité de trames temporelles, ledit procédé comprenant les étapes consistant à :

    attribuer (166) des ressources de communication définies en termes de décalage d'index d'allocation mobiles sur une pluralité de porteuses radio ;
    ordonnancer (168) la communication des données en conformité avec les attributions réalisées dans ladite étape d'attribution, le programme de communication des données prévoyant d'achever la communication des données au sein d'une unique trame temporelle sur la pluralité de trames temporelles[[.]] ; et
    produire (172) un message qui comprend des valeurs représentatives du programme, le message, après sa communication, identifiant le programme pour une station distante.

14. Procédé (162) selon la revendication 13, comprenant en outre, avant ladite étape d'attribution, l'étape consistant à détecter une indication des porteuses radio, au moins en termes de décalages d'index d'attribution mobiles, qui sont disponibles pour y communiquer des données, et dans lequel les ressources de communication attribuées dans ladite étape d'attribution (166) tiennent en outre compte de l'indication des porteuses radio qui sont disponibles.

15. Procédé (162) selon la revendication 13, comprenant en outre l'étape consistant à détecter une indication de la disponibilité de ressources de communication et dans lequel le programme de communication établi dans ladite étape d'ordonnancement (168) tient compte en partie de la disponibilité des ressources de communication.

16. Procédé (162) selon la revendication 13, dans lequel le programme de communication établi dans ladite étape d'ordonnancement (168) tient compte en outre d'une période de latence minimale de la station de communication.

17. Procédé (162) selon la revendication 13, dans lequel le bloc radio est formé sur un certain nombre de trames temporelles et dans lequel le nombre sélectionné de créneaux temporels comprend le nombre de trames nécessaires pour la communication d'un bloc radio, le programme de communication établi dans ladite étape d'ordonnancement comprenant un nombre exact de créneaux temporels dans l'unique trame temporelle pour la communication d'un bloc radio.

18. Procédé (162) selon la revendication 13, comprenant en outre, au niveau d'une station distante, l'étape consistant à accuser réception (182) des données, après qu'elles lui ont été communiquées, les accusés de réception étant renvoyés à la première station de communication au cours d'une trame temporelle de remise des données.

FIG. 1

FIG. 2

FIG. 3

132

TDMA FRAME

Timeslot Number: 0 1 2 3 4 5 6 7 | 0 1 2 3 4 5 6 7 | 0 1 2 3 4 5 6 7

134

RF Channel 1 — R1 R1 | R1 R1 | R1 R1
RF Channel 2 — R2 R2 | R2 R2 | R2 R2
RF Channel 3
RF Channel 4 — 138
RF Channel 5 — T1 T1 T1 T1
RF Channel 6 — T1 T1 T1 T1 | T2 T2
RF Channel 7 — T1 T1
RF Channel 8

$$\left[\sum_{b=1}^{Nb}\sum_{R=1}^{N_R} T_{bR} \geq d\right]$$

AND

$$\left[\sum_{b=1}^{Nb}\sum_{R=1}^{N_R} T_{bR}\ MOD\ d = 0\right]$$

136

$L_T \geq B$ — 142

$MIN : \sum_{b=1}^{Nb} B_b u_b$ — 148

146

$f_m \neq f_i$ — 156

$L_T$

$L_M$

Fm1
Fm2 — M2 | M2

152

$L_M \geq B$ — 154

FmMAX — M2

FIG. 4

<u>162</u>

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002044527 A1

- WO 0176096 A